# FASCICULE DE BREVET EUROPEEN

(11) **EP 4 490 704 B1**
(45) Date de publication et mention de la délivrance du brevet: **26.11.2025**
(21) Numéro de dépôt: 23762548.8
(22) Date de dépôt: 06.09.2023
(51) Int. Cl.: G06V 10/82, G06V 20/66, G06V 10/46

(54) **PROCÉDÉ DE DUPLICATION D'UNE CLÉ POUR OUVRANT À PARTIR D'UNE IMAGE DE CETTE CLÉ**
VERFAHREN ZUM DUPLIZIEREN EINES SCHLÜSSELS FÜR EIN TÜRBLATT AUS EINEM BILD DAVON
METHOD FOR DUPLICATING A KEY FOR A DOOR LEAF FROM AN IMAGE THEREOF

(30) Priorité: 07.09.2022 FR 2208938
(43) Date de publication de la demande: 15.01.2025
(73) Titulaire: Minit Operational Board Limited, London SW1A 1HA (GB)
(72) Inventeur: DUMAINE, Alexis, 91860 Epinay-sous-Sénart (FR); BERNET, Colin, 01390 MONTHIEUX (FR)
(74) Mandataire: Alatis
(86) Numéro de dépôt international: PCT/EP2023/074500
(87) Numéro de publication internationale: WO 2024/052426

(56) Documents cités:
- US-A1- 2022 180 621

## Description

La présente invention se rapporte au domaine de la duplication des clés pour tous types d'ouvrants.

Dans le cadre de la présente invention, les ouvrants peuvent être par exemple des portes ou des tiroirs.

Pour diverses raisons de la vie courante, il est souhaitable de pouvoir reproduire une clé : cela permet par exemple d'avoir un double, en cas de perte de la clé d'origine.

Jusque récemment, la duplication d'une clé nécessitait de se déplacer chez un serrurier, qui au moyen d'un outillage mécanique traditionnel pouvait réaliser une copie fidèle de la clé d'origine.

Dans le but de simplifier ces démarches, plusieurs offres ont été proposées sur le marché pour automatiser ce processus classique de duplication de clé.

Ces offres ont ceci de commun qu'elles proposent de partir d'une image de la clé à dupliquer, cette image pouvant être prise par exemple avec l'appareil photo d'un téléphone mobile.

Cette image est ensuite envoyée à une centrale où elle est analysée en vue d'indiquer au client si la clé tombe dans la catégorie des clés pouvant être reproduites à distance.

Si tel est le cas, après approbation d'un devis par le client - ce devis étant établi manuellement et de manière non immédiate - la clé est reproduite à distance, puis envoyée au client.

Des exemples d'un tel processus sont illustrés par la demande de brevet EP3992821 et par le brevet US 2022/180621 A1 (Xi Yongfeng et al.) publié le 09-06-2022.

Dans cette demande de brevet, la détermination de l'ébauche de la clé à reproduire, c'est-à-dire du modèle de clé avant réalisation de la découpe, est effectuée à partir de singularités repérées sur la clé d'origine, puis utilisation de ces singularités pour sélectionner l'ébauche appropriée dans une base de données d'ébauches.

Bien que présentant certains avantages, tels qu'un temps de calcul réduit, par rapport à d'autres solutions analogues, le processus décrit dans cette demande de brevet n'offre pas entière satisfaction en termes de fiabilité et de précision de la duplication des clés d'origine. De plus, le client doit attendre un certain temps avant d'obtenir un devis, ce qui allonge la durée globale du processus.

La présente demande de brevet a ainsi notamment pour but d'améliorer les procédés de duplication de clés partant d'une ou plusieurs images de la clé d'origine, de manière à gagner en fiabilité et en précision, et de réduire la durée globale du délai séparant la commande par le client de la livraison de sa clé dupliquée.

On atteint ce but de l'invention, ainsi que d'autres avantages qui apparaîtront à la lumière de la description qui va suivre, avec un procédé de duplication d'une clé pour ouvrant à partir d'au moins une image de cette clé, comprenant les étapes consistant à déterminer :
- a) le type de la clé,
- b) l'ébauche de la clé,
- c) la découpe de la clé,
dans lequel on réalise les étapes a) et b) au moyen d'au moins un algorithme d'apprentissage profond.

Grâce à l'utilisation d'un tel algorithme d'intelligence artificielle, on peut corriger au fur et à mesure les erreurs commises par l'algorithme, lui permettre de gagner en fiabilité et en précision, et réduire la durée globale du processus.

Grâce au procédé selon l'invention, on peut ainsi dupliquer des clés de manière précise et fiable, pratiquement sans intervention humaine, ce qui permet de proposer aux clients une offre très compétitive en termes de coûts et de délais.

Suivant d'autres caractéristiques optionnelles du procédé selon invention, prises seules ou en combinaison :
- ledit algorithme est du type à réseau de neurones convolutionnel profond : un tel algorithme, connu en soi, s'avère particulièrement adapté au procédé de duplication de clé ;
- on supprime l'arrière-plan de l'image de la clé au moyen d'un algorithme à réseau de neurones : un tel algorithme permet de corriger les erreurs liées à la présence d'un fond présentant un texturage ;
- on détermine l'orientation de la clé par rapport au cadre de l'image : cette étape permet de gagner en fiabilité lors de l'analyse du profil de la clé ;
- on réduit les zones de flou de l'image de la clé : cette étape contribue également au gain de fiabilité ;
- on détermine les dimensions réelles de la clé à partir de la distance inter-pistons de la serrure associée : cette étape permet de connaître la distance absolue entre les pixels de l'image de la clé analysée, et ainsi d'engendrer les informations nécessaires à la découpe de la clé ;
- on corrige l'ombre portée de la clé : cette étape de correction permet de connaître la largeur absolue de l'ébauche de la clé, et ainsi d'engendrer les informations nécessaires à la découpe de la clé ;
- on juxtapose sur la même image des prises de vues recto et verso d'au moins une partie de la clé : cette juxtaposition permet d'obtenir un maximum d'informations sur la clé à dupliquer, à partir de l'analyse d'une seule image ;
- on réalise l'étape b) en analysant au moins une zone particulière de la clé : l'analyse de cette zone particulière permet d'une part de réduire la taille de l'image à traiter, et d'autre part d'éviter de polluer l'algorithme d'intelligence artificielle avec des informations qui risquent de l'induire en erreur ;
- on réalise ladite analyse à partir de la dérivée première de la courbe du profil de la clé : cette dérivée première s'est révélée être un moyen simple pour repérer des points caractéristiques du profil de la clé ;
- ladite zone particulière comprend la zone de jonction de la tige avec la tête de la clé : cette zone de jonction s'est révélée être caractéristique des différentes ébauches de clés disponibles sur le marché ;
- on analyse des caractéristiques de rainures de la clé dans ladite zone particulière, ces caractéristiques étant choisies dans le groupe comprenant le nombre de rainures, les positions de ces rainures, les profondeurs de ces rainures, les formes des extrémités de ces rainures.

La présente invention se rapporte également à un produit programme d'ordinateur, adapté pour mettre en œuvre le procédé conforme à ce qui précède.

La présente invention se rapporte également à un système de duplication de clé, comprenant des moyens de prises de vues de la clé, des moyens d'analyse des images ainsi obtenues, des moyens de détermination du type de clé et de l'ébauche, et des moyens de découpe de cette ébauche, ce système étant piloté par un programme d'ordinateur conforme à ce qui précède.

D'autres caractéristiques et avantages de l'invention ressortiront à la lecture de la description qui suit, en référence aux figures annexées, qui illustrent :
[Fig. 1] : une vue d'une clé plate à dupliquer,
[Fig. 2] : des vues recto et verso juxtaposées de la zone de jonction de la tige avec la tête d'une clé plate,
[Fig. 3] : la courbe du profil d'une clé plate à dupliquer, et la dérivée première de cette courbe,
[Fig. 4] : la tige d'une clé plate sur laquelle sont mises en évidence les différentes profondeurs de découpe correspondant à chacun des pistons d'une serrure associée.

Pour plus de clarté, les éléments identiques ou similaires sont repérés par des signes de référence identiques ou similaires sur l'ensemble des figures.

Dans ce qui suit, l'invention sera décrite dans le cadre de la duplication d'une clé plate, mais il faut bien comprendre que les principes de l'invention sont applicables à la duplication de tout autre type de clé.

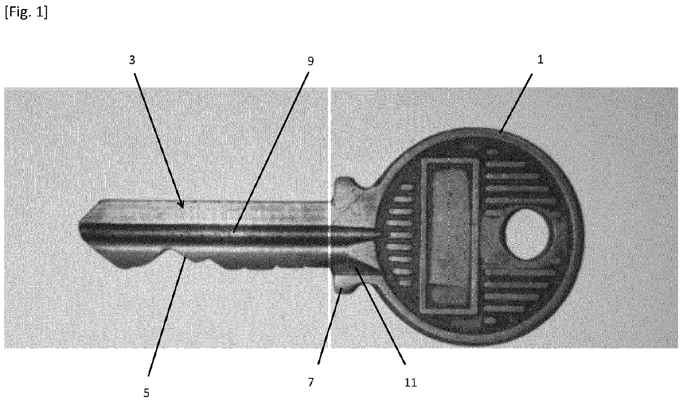

On se reporte à présent à la figure 1, sur laquelle on a donc représenté une clé plate à dupliquer.

Une telle clé plate comprend une tête 1, une tige 3 sur laquelle est réalisée un profil de découpe 5, une butée 7, disposée dans la zone de liaison de la tige avec la tête, et des rainures longitudinales 9, 11 s'étendant sur la longueur de la tige.

La tête 1 de la clé permet sa préhension, la tige 3 de la clé munie de son profil de découpe 5 et de ses rainures 9, 11 permet la coopération avec le barillet et avec les pistons d'une serrure, et la butée 7 de la clé permet le positionnement longitudinal correct de la clé, lorsqu'elle est insérée dans la serrure.

Une telle clé est dite plate, en ceci que la tête 1, la tige 3, le profil de découpe 5 et la butée 7 sont pratiquement contenus dans un plan, par opposition à d'autres clés du marché telles que les clés à pompe ou les clés à gorges ou les clés à vagues (ces dernières étant souvent utilisées pour ouvrir des serrures de portières de véhicules automobiles).

La question que l'on se pose dans le cadre de la présente invention est donc de pouvoir dupliquer une telle clé plate de manière simple, automatisée, précise, fiable et rapide.

Pour cela, on commence par obtenir des images recto et verso de la clé à dupliquer : ces images peuvent être fournies par l'appareil photo du téléphone portable d'un utilisateur, ou bien par un dispositif de prise de vues installé dans une borne fixe, située par exemple aux abords d'un supermarché.

Idéalement, il convient que les prises de vue de la clé soient effectuées sur un fond mat non structuré, c'est-à-dire uni et ne présentant pas de texturage.

En pratique, cette condition ne peut pas toujours être remplie, aussi peut-on utilement recourir à des applications de suppression d'arrière-plan (« *segmentation* » en anglais), tel que celui disponible sur la plateforme https://remove.bg/fr, utilisant un algorithme à réseau de neurones.

On utilise par ailleurs des algorithmes connus en soi pour corriger l'orientation de la clé par rapport au bord du cadrage des images, ainsi que pour résorber les zones de flou.

A partir des images ainsi obtenues, on commence par déterminer le type de clé dont il s'agit : il existe par exemple en Europe environ 16 types de clés (plates, à pompe, à gorges, à vagues,....).

Cette étape de détermination est effectuée au moyen d'un algorithme d'intelligence artificielle, plus particulièrement d'un algorithme de réseau neuronal convolutionnel profond.

Un tel algorithme, utilisant un grand nombre d'images ayant précédemment été validées, fournit des résultats précis et fiables quant au type de clé.

Une fois déterminé le type de clé (plate, à pompe, à gorges, à vagues...), on passe à une étape suivante de détermination du modèle de clé, c'est-à-dire de l'ébauche qu'il convient de choisir en vue de réaliser la découpe du profil approprié.

L'ébauche de la clé à dupliquer est en fait une clé sans profil de découpe, apte à s'insérer dans la même serrure que la clé à dupliquer, c'est-à-dire en particulier pourvue d'une tige dont les dimensions (longueur, largeur) et la forme (section) permettent l'insertion de cette ébauche à l'intérieur de la serrure associée.

En Europe par exemple, il existe plus de 2000 ébauches différentes de clés plates.

Dans le procédé selon la présente invention, on recourt de nouveau à un algorithme d'apprentissage profond, de préférence du type à réseaux de neurones convolutionnel profond, pour déterminer l'ébauche de clé appropriée à partir des images de la clé : contrairement à l'état de la technique, on ne recourt donc pas à une base de données d'ébauches que l'on interroge au moyen d'un descripteur caractéristique de la clé à dupliquer.

Cet algorithme d'apprentissage profond peut être corrigé au fur et à mesure par un opérateur, en vue de l'amélioration de sa précision et de sa fiabilité.

Selon une option qui s'avère particulièrement efficace, on peut réduire la taille de l'image analysée à une zone particulière de la clé.

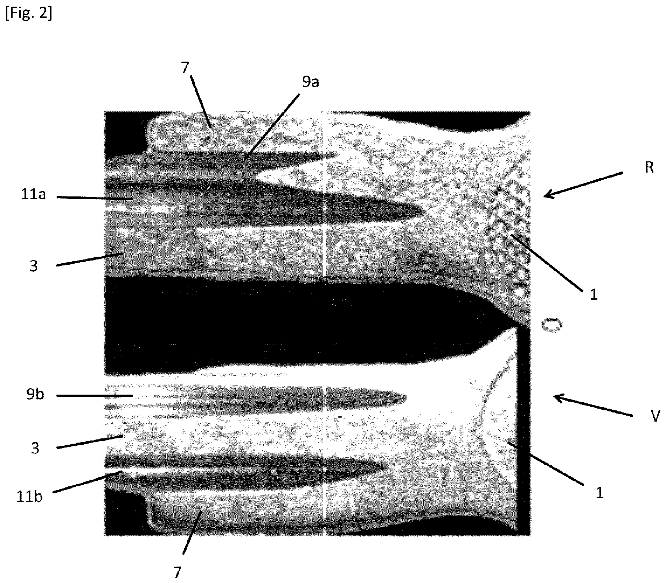

Plus précisément, comme cela est visible sur la figure 2, l'image analysée peut concerner les faces recto R et verso V de la zone de jonction de la tige 3 avec la tête 1 de la clé, où se trouve la butée 7 de cette clé.

Il est en effet apparu que cette zone de jonction est tout à fait caractéristique de la clé à dupliquer.

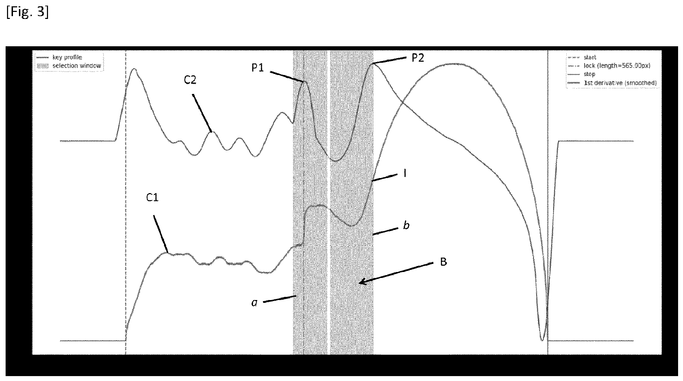

On a représenté sur la figure 3 la courbe C1 du profil de la clé à dupliquer, ainsi que la courbe de la dérivée première C2 de cette courbe de profil.

La courbe de la dérivée première C2 comporte deux pics caractéristiques P1, P2 correspondant respectivement à la position de la butée 7 de la clé, et au point d'inflexion I de la tête de la clé.

La position de ces deux pics C1, C2 sur l'axe longitudinal de clé (axe des abscisses sur la figure 3) permet de définir une bande B sur la clé s'étendant d'une position *a* située légèrement avant la butée 7, jusqu'à une position b correspondant au point d'inflexion I.

Cette bande B correspond à la zone de la clé dans laquelle les rainures 9a, 11a (côté recto) et 9b, 11b (côté verso) de la clé viennent mourir, avec toute une gamme de géométries possibles pour l'extrémité de ces rainures, selon le type de fraisage qui a été utilisé : en ogive ou en pointe comme cela est visible par exemple sur la figure 2, ou bien en biseau, etc.

Il est apparu, après recensement des modèles de clés plates existant sur le marché que, pour les deux faces de la clé, le nombre de rainures dans la zone de la bande B, les positions de ces rainures, les profondeurs de ces rainures, les formes des extrémités de ces rainures, sont des informations caractéristiques de chaque modèle de clé.

Ainsi, l'analyse de l'image des deux faces de la clé dans la zone de la bande B au moyen d'un algorithme d'apprentissage profond, de préférence du type à réseaux de neurones convolutionnel profond, permet de réaliser une ségrégation fiable entre les différents modèles de clés plates.

On notera en particulier que le fait de prévoir que la bande B commence légèrement avant la butée 7 (partie *a* de la bande B sur la figure 3) permet de prendre de la marge pour couvrir les cas où les rainures 9, 11 s'arrêteraient avant cette butée.

Une fois l'ébauche de la clé à dupliquer ainsi déterminée, on détermine les paramètres nécessaires à la découpe physique de la tige 5 de la clé.

Pour ceci, il est indispensable de connaître les dimensions effectives de la clé à dupliquer, c'est-à-dire la distance absolue entre les pixels de l'image de la clé à dupliquer.

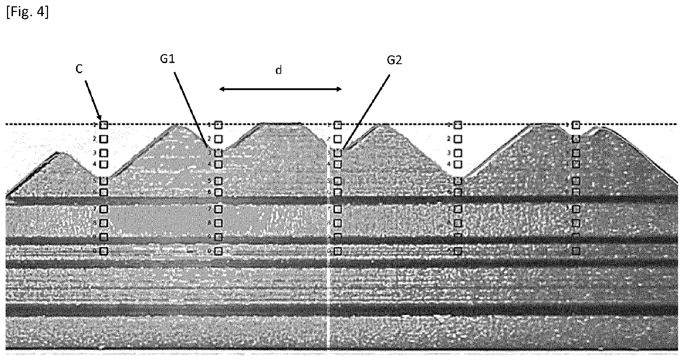

Pour cela, on calibre cette image à partir de la distance d séparant deux gorges successives G1, G2, comme représenté sur la figure 4 : cette distance d, qui correspond à la distance séparant deux pistons de la serrure associée, est en effet connue pour une ébauche de clé donnée.

Pour gagner en précision, on peut d'ailleurs moyenner l'ensemble des distances inter-gorges à dupliquer de la clé.

Un autre paramètre important est la largeur de la tige 5 de la clé à dupliquer, c'est-à-dire la largeur de l'ébauche.

La détermination de cette largeur peut être entachée d'erreurs, en raison des ombres portées lors de la prise de vue de la clé à dupliquer.

Pour cela, une fois déterminée l'ébauche appropriée selon les principes qui précèdent, on déduit par différence la largeur de l'ombre portée : cela permet de déterminer avec précision la profondeur de chaque gorge à découper sur l'ébauche, cette profondeur pouvant être exprimée par un codage allant par exemple de 1 à 10, comme cela est illustré sur la figure 4.

Une fois déterminés le type de clé, le modèle et la découpe à réaliser sur l'ébauche, on peut envoyer immédiatement au client, par exemple à son adresse électronique, et de manière automatisée, un devis de duplication de la clé.

A réception de l'accord du client sur le devis, à partir du codage de la clé déterminé comme indiqué ci-dessus, une machine automatisée supervisée par un opérateur peut réaliser la découpe du profil de la clé dans la tige de l'ébauche.

Des opérations de finition (polissage) et de test peuvent ensuite compléter cette découpe.

Comme on l'aura compris la lumière de ce qui précède, le procédé selon l'invention permet une automatisation précise, fiable et rapide du processus de reproduction d'une clé, telle qu'une clé plate.

Ce procédé selon invention peut être mis en œuvre par une machine intégrée comprenant des moyens de prise de vue de la clé, des moyens logiciels permettant de mettre en œuvre les étapes décrites ci-dessus, et des moyens de découpe du profil de la clé : dans ce cas, l'utilisateur place la clé à dupliquer dans la machine, et reçoit quelques instants après sa clé dupliquée.

Bien entendu, une interface homme/machine, telle qu'une application sur smartphone, est prévue, permettant de poser des questions à l'utilisateur (par exemple nombre d'exemplaires à produire de la clé dupliquer), de lui soumettre un devis, et de facturer la prestation.

De manière alternative, les prises de vues de la clé à dupliquer peuvent-être réalisées par l'utilisateur lui-même, par exemple au moyen de l'appareil photo d'un téléphone portable.

Une application téléchargée sur ce téléphone peut alors permettre d'envoyer ces prises de vues à un serveur distant, sur lequel les moyens d'analyse et de traitement décrits ci-dessus sont mis en œuvre.

Sur le même site que ce serveur distant, ou bien sur encore un autre site, une machine automatisée supervisée par un opérateur, peut réaliser la découpe du profil sur l'ébauche de clé appropriée, puis envoyer la clé dupliquée à l'utilisateur par voie postale.

Les questions posées à l'utilisateur sur la machine et/ou l'intervention d'un opérateur dans le processus de détermination du type de clé et de l'ébauche appropriée, permettent de corriger au fur et à mesure des erreurs commises par l'algorithme d'apprentissage profond, et ainsi d'améliorer au fil du temps la précision et la fiabilité du procédé.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Procédé de duplication d'une clé pour ouvrant à partir d'au moins une image de cette clé, comprenant les étapes consistant à déterminer : a) le type de la clé, b) l'ébauche de la clé, c) la découpe de la clé, dans lequel on réalise les étapes a) et b) au moyen d'au moins un algorithme d'apprentissage profond.

2. Procédé selon la revendication 1, dans lequel ledit algorithme est du type à réseau de neurones convolutionnel profond.

3. Procédé selon l'une des revendications 1 ou 2, dans lequel on supprime l'arrière-plan de l'image de la clé au moyen d'un algorithme à réseau de neurones.

4. Procédé selon quelconque des revendications 1 à 3, dans lequel on détermine l'orientation de la clé par rapport au cadre de l'image.

5. Procédé selon l'une quelconque des revendications précédentes, dans lequel on réduit les zones de flou de l'image de la clé.

6. Procédé selon l'une quelconque des revendications précédentes, dans lequel on détermine les dimensions réelles de la clé à partir de la distance inter-pistons (d) de la serrure associée.

7. Procédé selon l'une quelconque des revendications précédentes, dans lequel on corrige l'ombre portée de la clé.

8. Procédé selon l'une quelconque des revendications précédentes, dans lequel on juxtapose sur la même image des prises de vues recto et verso d'au moins une partie de la clé.

9. Procédé selon l'une quelconque des revendications précédentes, dans lequel on réalise l'étape b) en analysant au moins une zone particulière de la clé.

10. Procédé selon la revendication 9, dans lequel on réalise ladite analyse à partir de la dérivée première (C2) de la courbe (C1) du profil (5) de la clé.

11. Procédé selon l'une des revendications 9 ou 10, dans lequel ladite zone particulière comprend la zone de jonction de la tige (5) avec la tête (1) de la clé.

12. Procédé selon la revendication 11, dans lequel on analyse des caractéristiques de rainures de la clé dans ladite zone particulière, ces caractéristiques étant choisies dans le groupe comprenant le nombre de rainures, les positions de ces rainures, les profondeurs de ces rainures, les formes des extrémités de ces rainures.

13. Produit programme d'ordinateur, adapté pour mettre en œuvre le procédé conforme à l'une quelconque des revendications 1 à 12.

14. Système de duplication de clé, comprenant des moyens de prises de vues de la clé, des moyens d'analyse des images ainsi obtenues, des moyens de détermination du type de clé et de l'ébauche, et des moyens de découpe de cette ébauche, ce système étant piloté par un produit conforme à la revendication 13.

## Patentansprüche

1. Verfahren zum Duplizieren eines Schlüssels für eine Öffnung anhand mindestens eines Bilds dieses Schlüssels, umfassend die Schritte zum Bestimmen: a) des Schlüsseltyps, b) des Schlüsselrohlings, c) des Schlüsselzuschnitts, wobei die Schritte a) und b) mittels mindestens eines Deep-Learning-Algorithmus durchgeführt werden.

2. Verfahren nach Anspruch 1, wobei der Algorithmus vom Typ des tiefen neuronalen Faltungsnetzwerks ist.

3. Verfahren nach einem der Ansprüche 1 oder 2, wobei der Hintergrund des Schlüsselbildes mittels eines neuronalen Netzwerkalgorithmus entfernt wird.

4. Verfahren nach einem der Ansprüche 1 bis 3, wobei die Ausrichtung des Schlüssels in Bezug auf den Bildrahmen bestimmt wird.

5. Verfahren nach einem der vorhergehenden Ansprüche, wobei die Unschärfebereiche des Schlüsselbildes reduziert werden.

6. Verfahren nach einem der vorhergehenden Ansprüche, wobei die tatsächlichen Abmessungen des Schlüssels aus dem Kolbenabstand (d) des zugehörigen Schlosses ermittelt werden.

7. Verfahren nach einem der vorhergehenden Ansprüche, wobei der Schatten des Schlüssels korrigiert wird.

8. Verfahren nach einem der vorhergehenden Ansprüche, wobei auf demselben Bild Vorder- und Rückseitenaufnahmen von mindestens einem Teil des Schlüssels nebeneinander angeordnet werden.

9. Verfahren nach einem der vorhergehenden Ansprüche, wobei der Schritt b) durch Analyse mindestens eines bestimmten Bereichs des Schlüssels durchgeführt wird.

10. Verfahren nach Anspruch 9, wobei die Analyse anhand der ersten Ableitung (C2) der Kurve (C1) des Profils (5) des Schlüssels durchgeführt wird.

11. Verfahren nach einem der Ansprüche 9 oder 10, wobei der besondere Bereich den Verbindungsbereich des Stabs (5) mit dem Kopf (1) des Schlüssels umfasst.

12. Verfahren nach Anspruch 11, wobei Merkmale von Nuten des Schlüssels in dem besonderen Bereich analysiert werden, wobei diese Merkmale aus der Gruppe ausgewählt sind, die die Anzahl der Nuten, die Positionen dieser Nuten, die Tiefen dieser Nuten, die Formen der Enden dieser Nuten umfasst.

13. Computerprogrammprodukt, das zur Umsetzung des Verfahrens nach einem der Ansprüche 1 bis 12 ausgelegt ist.

14. System zum Duplizieren eines Schlüssels, umfassend Mittel zur Aufnahme des Schlüssels, Mittel zur Analyse der so erhaltenen Bilder, Mittel zur Bestimmung des Schlüsseltyps und des Rohlings und Mittel zum Schneiden dieses Rohlings, wobei dieses System von einem Produkt gemäß Anspruch 13 gesteuert wird.

## Claims

1. Method for duplicating a key for a door leaf from at least one image of this key, comprising the steps of determining: a) the type of the key, b) the blank of the key, c) the cutting of the key, wherein the steps a) and b) are performed by means of at least one deep learning algorithm.

2. Method according to claim 1, wherein said algorithm is of the deep convolutional neural network type.

3. Method according to one of claims 1 or 2, wherein the background of the image of the key is removed by means of a neural network algorithm.

4. Method according to any one of claims 1 to 3, wherein the orientation of the key with respect to the frame of the image is determined.

5. Method according to any one of the preceding claims, wherein the fuzzy zones of the image of the key are reduced.

6. Method according to any one of the preceding claims, wherein the actual dimensions of the key are determined from the inter-pin distance (d) of the associated lock.

7. The method according to any one of the preceding claims, wherein the shadow carried by the key is corrected.

8. Method according to any one of the preceding claims, wherein the front and back views of at least a part of the key are juxtaposed on the same image.

9. Method according to any one of the preceding claims, wherein step b) is performed by analysing at least one particular area of the key.

10. Method according to claim 9, wherein said analysis is performed from the first derivative (C2) of the curve (C1) of the profile (5) of the key.

11. Method according to either one of claims 9 or 10, wherein said particular area comprises the junction area of the stem (5) with the head (1) of the key.

12. Method according to claim 11, wherein characteristics of grooves of the key in said particular area are analysed, these characteristics being selected from the group comprising the number of grooves, the positions of these grooves, the depths of these grooves, and the shapes of the ends of these grooves.

13. Computer program product, adapted to implement the method according to any one of claims 1 to 12.

14. Key duplication system, comprising means for taking pictures of the key, means for analysing the images thus obtained, means for determining the type of key and the blank, and means for cutting this blank, this system being controlled by a product according to claim 13.
